# EUROPEAN PATENT APPLICATION

(11) **EP 1 980 947 A1**
(43) Date of publication of application: **15.10.2008**
(21) Application number: 07106167.5
(22) Date of filing: 13.04.2007
(51) Int. Cl.: G06F 12/08

(54) **Processor arrangement with scaleable cache and method of using same**

(71) Applicant: SiTel Semiconductor B.V., 5215 MV 's-Hertogenbosch (NL)
(72) Inventor: Wolters, Gerardus Antonius Maria, 5384 XG, Heesch (NL)
(74) Representative: Hutter, Jacobus Johannes

(57) **Abstract**

A processing arrangement with a processor core (100) and a cache controller logic (102), as well as a first and a second memory block (104(1), 104(2)) in random access memory. The first memory block (104(1)) has a cache administration memory (104(1a) - 104(1c)). The second memory block (104(2)) has a cache memory (104(2a)). The cache memory (104(2a)) has a cache memory size that is set by cache management information stored in a cache control register (103) in the cache controller logic (102) as instructed by the processor core (100) while running a program or the cache control register (104(1 a) - 104(1c)) has a cache control register size that is set by the cache management information stored in the cache control register (103) as instructed by the processor core (100) while running the program, or both.

## Description

### Field of the invention

The present invention is in the field of processors using cache memory.

### Background of the invention

Cache systems always use RAM for data and registers for cache administration.

Most of the time, this is fine, but sometimes, when the cache is not needed in all situations, it can be an extra overhead. This situation may occur for example in some baseband processors that can be used for VoIP (Voice over IP, IP = Internet Protocol) basestations, where a cache is certainly needed, but also for handsets, where a cache is not needed, or a smaller cache would be sufficient.

When a classical cache would be implemented in such a baseband processor, a VoIP base station application would benefit from this, but in a handset application, the cache would be too large, resulting in a price for the device that could be too high.

### Summary of the invention

It is an object of the present invention to reduce memory space needed for cache.

To that end, the invention provides a processing arrangement comprising a processor core and a cache controller logic comprising a cache control register storing cache management information, as well as random access memory, the random access memory being subdivided into at least a first and a second memory block, the first memory block comprising at least one cache administration memory, the second memory block comprising at least one cache memory, wherein the processing arrangement has at least one of the following features:
- the at least one cache memory has a cache memory size that is set by the cache management information stored in the cache control register in the cache controller logic as instructed by the processor core while running a program, and
- the at least one cache administration memory has a cache administration size that is set by the cache management information stored the cache control register in the cache controller logic as instructed by the processor core while running the program.

In an embodiment, the invention provides a method of setting a cache size in a processing arrangement, the processing arrangement comprising a processor core and a cache controller logic comprising a cache control register storing cache management information, as well as random access memory, the random access memory being subdivided into at least a first and a second memory block, the first memory block comprising at least one cache administration memory, the second memory block comprising at least one cache memory, wherein the method comprises at least one of the following actions:
- setting a cache memory size of the at least one cache memory by the cache management information stored in the cache control register in the cache controller logic by running a program on the processor core, and
- setting a cache administration size of the at least one cache administration memory by the cache management information stored in the cache control register in the cache controller logic as instructed by the processor core while running the program.

A reduction of the needed memory is possible by introducing the claimed scalable cache construction. With this construction, it is possible to use a part of the available internal memory of a processor as a cache. Scaling can be done once, or a number of times before the application that runs on the processor is initialized. However, it is envisaged that, alternatively, scaling can also be done dynamically, at run time.

If much cache is needed, the complete internal memory can be configured as cache. This can, e.g., be done for VoIP baseband applications, where large, high power demanding SDRAM devices can be used. In this case, there is external memory enough for variables and stack.

If less cache or no cache is needed, much more of the internal memory can be used for work memory, like variables and stack. This avoids the need of extra external RAM which is often a requirement in case of handsets powered with a battery.

### Brief description of the drawings

The invention will be explained in detail with reference to some drawings that are only intended to show embodiments of the invention and not to limit the scope. The scope of the invention is defined in the annexed claims and by its technical equivalents.

The drawings show:
Figure 1 shows a schematic setup of a computer arrangement for performing the invention;
Figure 2 shows a flow chart of a method of reading data from cache memory or from an external memory if such data is not available in the cache memory;
Figure 3 shows an alternative method to the method shown in figure 2;
Figures 4, 5 and 6 show different embodiments of memory organizations.

### Detailed description of embodiments

The present invention can be applied in all kinds of different processing arrangements with cache memory. One important application is wireless handsets, however, the invention is not restricted to this. In the figures below, an embodiment will be described with a processor connected to several different I/O devices like keyboards, mouses, etc. It is observed that such kind of I/O devices need not all be present in every application.

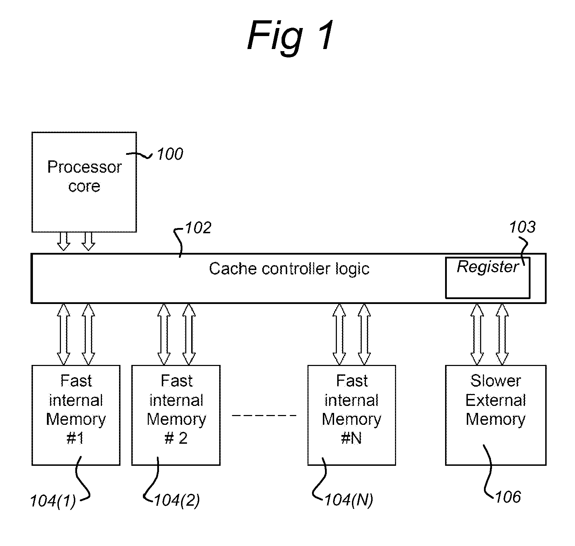

Figure 1 shows an embodiment of a processing arrangement with a memory configuration that enables a scalable cache.

The processor arrangement comprises a processor core 100 that is connected to cache control logic 102. The connection may be based on wires but may, alternatively, be a wireless connection. This holds for any connection shown in figure 1. The cache controller logic 102 comprises a cache control register 103 that holds values of internal operations relating to the cache memory management of the present invention, as will be explained below. These values will be written by software, running on the processor core 100 upon initialization. The cache controller logic 102 is connected to a plurality of internal memories 104(n), n = l, 2, ..., N, and to one or more external memories 106.

The internal memory is RAM (random access memory), which may be implemented in any known way known to persons skilled in the art, like DRAM (dynamic random access memory) or SDRAM (synchronous dynamic random access memory).

The external memory 106 may be a hard disk, Read Only Memory (ROM), Electrically Erasable Programmable Read Only Memory (EEPROM). The external memory 106 need not be located physically close to the processor core 100 but may be located remote from the processor core 100.

In practice, the processor core 100 will be also connected to means for inputting instructions, data etc. by a user, like a keyboard, and a mouse. Other input means, such as a touch screen, a track ball and/or a voice converter, known to persons skilled in the art may be provided too.

A reading unit connected to the processor core 100 may be provided. Such a reading unit may be arranged to read data from and possibly write data on a data carrier like a floppy disk or a CDROM. Other data carriers may be tapes, DVD, etc. as is known to persons skilled in the art.

The processor core 100 may be connected to a printer for printing output data on paper, as well as to a display, for instance, a monitor or LCD (Liquid Crystal Display) screen, or any other type of display known to persons skilled in the art.

The processor core 100 may be connected to a communication network, for instance, the Public Switched Telephone Network (PSTN), a Local Area Network (LAN), a Wide Area Network (WAN), etc. by means of I/O means. The processor core 100 may be arranged to communicate with other communication arrangements through the network.

The data carrier may comprise a computer program product in the form of data and instructions arranged to provide the processor core 100 with the capacity to perform a method in accordance with the invention. However, such computer program product may, alternatively, be downloaded via the telecommunication network.

The processor core 100 may be implemented as stand alone system, or as a plurality of parallel operating processors each arranged to carry out subtasks of a larger computer program, or as one or more main processors with several sub-processors. Parts of the functionality of the invention may even be carried out by remote processors communicating with processor core 100 through the network.

The processor core 100 and cache controller logic 102 may be implemented in separate computers, however, alternatively, they may be implemented in one and the same computer.

In default mode, the cache controller logic 102 is configured in such a way that all the internal memories 104(1) to 104(N) can be accessed by the processor core 100 as regular internal memory.

Every internal memory block 104(n) has its own unique start address and there are no overlapping area's, i.e., every internal memory address is only located in one of the internal memory blocks 104(n). This means also that only one of the internal memory blocks 104(n) is active at any moment.

For use as internal memory only, one internal memory block 104(n) would be sufficient. However, if we want the possibility to configure the memory as cache, at least two internal memory blocks 104(n) are needed. One of these internal memory blocks contains cache administration records, whereas the other internal memory block, then, contains cache data. These administration records specify at least which cache memory addresses contain valid cache data, and the most significant part of the external memory address, where this cache data was read from. For the sake of easiness, below it will be assumed that at least part of the internal memory block 104(1) stores the cache administration records. Therefore, this part will be called "cache administration memory" 104(1a). Moreover, it will be assumed that internal memory block 104(2) is at least partly assigned to store cache data. Therefore, this part of internal memory 104(2) will be called "cache memory" 104(2a).

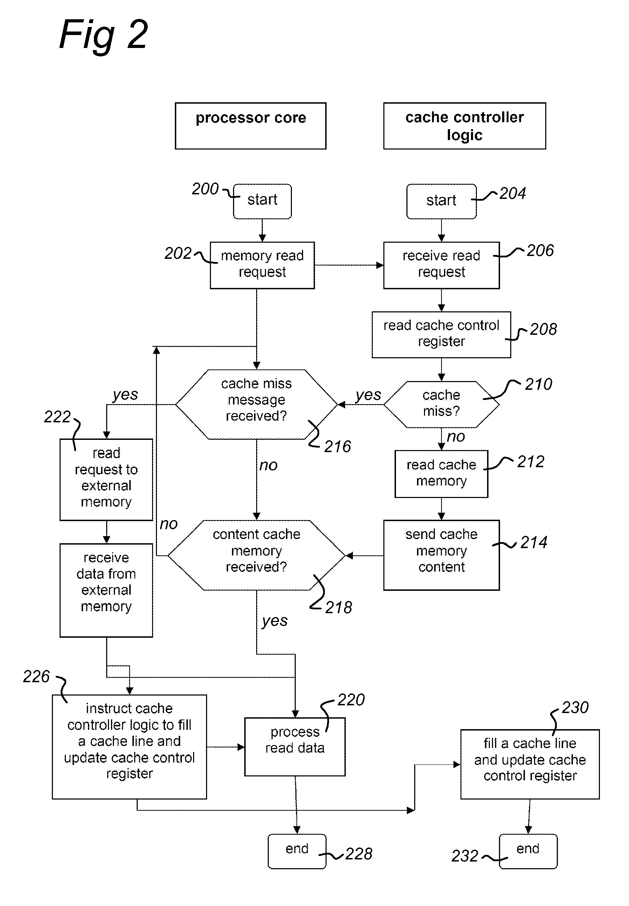

Figure 2 shows a flow chart of a method performed by both the processor core 100 and cache controller logic 102. The blocks in the flow chart of figure 2 that are below the block indicated by "processor core" are associated with actions performed by the processor core 100, whereas the blocks in the flow chart of figure 2 that are below the block indicated by "cache controller logic" are associated with actions performed by the cache controller logic 102.

In action 200, processor core 100 starts running its program, whereas cache controller logic 102 starts running its program in action 204.

In action 202, the processor core 100 starts a memory read cycle by sending a memory read request to cache controller logic 102. In action 206, the cache controller logic 102 receives that request and continues, in action 208, by reading the cache control register 104(1) in order to check whether there is valid data in the cache memory 104(2a) at the address as specified by the processor core 100. Based on the output of action 208, the cache controller logic 102 establishes in action 210 whether or not there is a cache hit or a cache miss. In case of a cache miss, the cache controller logic sends a message to that effect to the processor core 100.

If there is no cache miss the cache controller logic 102 reads the content from the specified address in cache memory 104(2a), action 212. Then, in action 214, cache controller logic 102 sends the read data to the processor core 100.

In action 216, processor core 100 checks whether it has received data from cache controller logic 102 indicating that a cache miss occurred. If not, processor core 100 continues with action 218 where it checks whether it has received from cache controller logic 102 data read from the cache memory 104(2a). If no such data has been received in action 218, the processor core 100 jumps back to action 216 to check whether it has received a cache miss message.

If, in action 216, processor core 100 has found that it has received a cache miss message from cache controller logic 102, processor core 100 continues with action 222, where it sends a read request to the external memory 106 by specifying the appropriate address. In action 224 processor core 100 receives the requested data from external memory 106. In action 226, processor core 100 instructs cache controller logic 102 to fill a cache line in cache memory 104(2a) with those data and to update the administration record in cache control register 104(1), which instructions are performed by cache controller logic 102 in action 230. In action 232, the program for cache controller logic 102 ends.

After the processor core 100 has received the requested data, either via action 224 or via action 218, in action 220, the processor core 100 processes the data as read from memory.

In action 228, the program for processor core 100 ends.

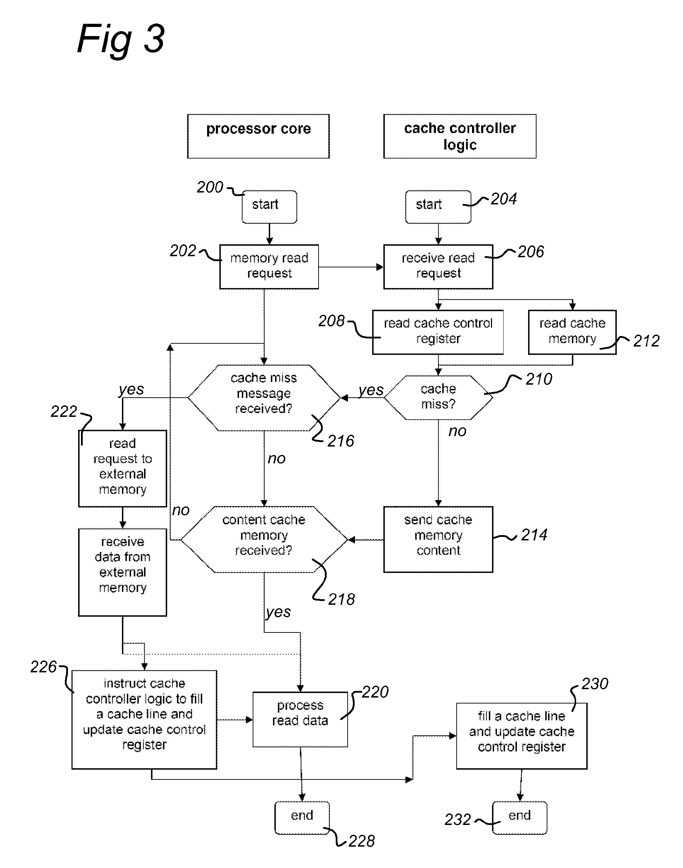

Figure 3 shows an alternative flow chart for the one shown in figure 2. The difference between the two flow charts is that, in figure 3, block 212 where the cache controller reads cache memory 104(2a) is shifted to another place in the flow chart. In the alternative embodiment of figure 3, this action takes place at the same time that the cache controller logic 102 reads cache control register 104(1), i.e., action 208. Again, the address in the cache memory 104(2a) is derived from the address offered by the processor core 100.

So, in the embodiment of figure 3, after the memory read cycle performed by cache controller logic 102, the outputs of both memories 104(1) and 104(2) are available at the same time. The advantage is that if the cache control register 104(1) indicates that the data on the specified address is valid cache data, that data is directly available. If so, the cache controller logic 102 can directly continue with performing action 214. If not, the cache miss message is sent to processor core 100 and the data as read from memory will be disregarded.

Since in the proposed memory management, regular memory is used as cache administration memory 104(1) to maintain administration records, the initialization of the administration records has to be done in software instead of in hardware. This will be done by software, on the processor core 100. This will take some effort from processor core 100, but only at start-up time. At start-up time, the amount of memory addresses in internal memory 104(1) assigned to function as cache administration memory 104(1a) and the amount of memory addresses in internal memory 104(2) assigned to function as cache memory 104(2a) is registered in cache control register 103 by cache controller logic 102 as instructed by processor core 100. Data as to this amount is derived by processor core 100 from the specific program it is running. This amount may be fixed for all applications (programs), however, the amount may differ per application.

Only in case of two way or four way associative cache implementations, that will be explained below, extra wait cycles are needed sometimes to update the administration records in cache administration memory 104(1).

### Examples.

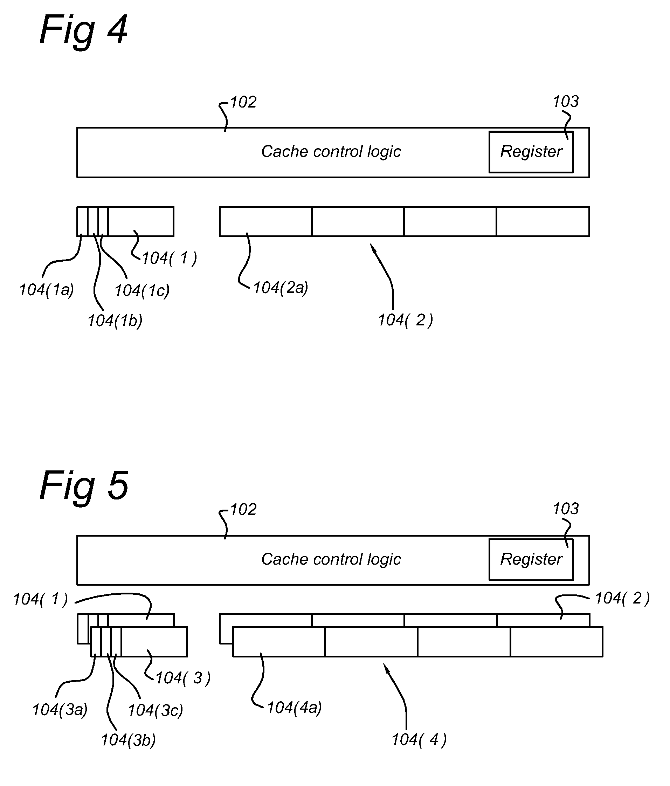

Explained below as a first example, is the configuration as it is implemented in a baseband processor with regular RAM. Implemented is a one way associative cache. Two internal memory blocks 104(1) and 104(2) are used each 32 bits wide, but byte wise addressable, since this is required for normal RAM usage. The example is schematically shown in figure 4.

Internal memory 140(1) is used for cache administration, internal memory 140(2) is used for cache data. Internal memory 140(1) comprises 8 kByte, internal memory 140(2) comprises 32 kByte.

Depending on the setting of the bits in the cache control register 103, part of the cache control logic 102, , the following cache configurations can, for example, be chosen:

| Cache size in memory 140(2) | Available as internal memory in memory 140(1) | Available as internal memory in memory 140(2) |
|---|---|---|
| 0 k | 8 k, 0x8000 - 0x9FFF | 32 k, 0x0000 - 0x7FFF |
| 4 k | 7.5 k, 0x8000 - 0x9EFF | 28 k, 0x0000 - 0x6FFF |
| 8 k | 7 k, 0x8000 - 0x9BFF | 24 k, 0x0000 - 0x5fff |
| 16 k | 6 k, 0x8000 - 0x97FF | 16 k, 0x0000 - 0x3fff |
| 32 k | 4 k, 0x8000 - 0x8FFF | 0 k, no memory |

As shown in this table, the memory space in internal memory 140(1) and 140(2) that is not available as internal memory, is used as cache.

Cache administration memory 140(1) contains 16 bit wide administration records, one record for each cache line in cache memory 140(2a).

Cache memory 140(2a) contains 128 bit wide cache lines, each line containing 4 words of 32 bit each.

Since words in cache administration memory 140(1) are also 32 bits wide, every word in cache administration memory 140(1) will contain two administration records. The picture in figure 4 shows the organization. Figure 4 shows a plurality of administration records 140(1a), 140(1b), 140(1c) in cache administration140(1). Each administration record 140(1a), 140(1b) 140(1c) contains:
- a predetermined number of administration bits; the most important administration bit is a "Valid bit" indicating whether the cache line in cache memory associated with this administration record is assigned to contain valid cache data.
- the MSB (most significant bits) part of the address in cache administration memory 140(1), that belongs to the associated cache line in cache memory 140(2).

For the explanation below, it is assumed that a cache size of 16 kByte in internal memory 140(2) is selected.

Before that part of internal memory 140(2) is selected to be cache memory, the part of internal memory 140(1) relating to the non-selected part of internal memory 140(2), i.e., addresses 0x9800 - 0x9FFF, have to be cleared by software running on cache controller logic 102. Important is that all Valid bits are zero.

In an embodiment that was tested, there are three bits in the cache control register 103 that define the amount of available cache for the application, e.g. in accordance with the following definition: 000=no cache, 100=4k, 101=8k, 110=16k, and 111=32k cache. These bits can be written by the processor core 100 at any given time, but most likely at the start of an application.

Now the processor core 100 does a read request action (action 202). The cache controller logic 102, in action 206, establishes if the received address is in the region that will be cached (defined in the cache control register 103., the following will happen:
- by means of some address bits, for instance, bits 13, 12, ..., 4, in action 212 (figure 3 embodiment), cache controller logic 102 selects the cache line in cache memory 140(2a), and by means of bits 3, 2, ..., 0 cache controller logic 102 selects the data within the correct cache line in cache memory 140(2a).
- moreover, by means of, for instance again, address bits 13, 12, ..., 5, cache controller logic 103 selects the word in cache control register 140(1) that contains the administration record, whereas cache controller logic 102 uses address bit 4 to select the correct administration record (remember there are two such records in one word); so, in this embodiment, the proper cache line in cache memory 104(2a) and the proper word in cache control register 140(1) are selected by the same bits of the read request instruction;
- if the Valid bit is set in that administration record and address bits 24, 23, ..., 14 match with the MSB bits in the administration record, the cache controller decides that there is a cache hit, action 210; then, in action 214, cache controller logic 102 returns the data from the selected cache line to the processor core 100, which therefore does not need any external memory access;
- if either the Valid bit is not set or if address bits 24, 23, ..., 14 do not match with the MSB bits in the administration record, or both, cache controller logic 102 observes a cache miss, action 210; the cache controller logic 102 sends a message to that effect to the processor core 100 (action 210). After that processor core 100 accesses external memory 106 (actions 222). 128 bits are read from the external memory 106 to fill one complete cache line (actions 224, 226, 230). In the administration record, the Valid bit and the MSB address bits are set (action 230). Preferably, the requested data from external memory 106 is returned to the processor core 100 at the same moment that it is stored in the cache line of cache memory 104(2a) by cache controller logic 102. The processor core 100 waits until the complete cache line is filled before it continues.

When the processor core 100 wants to access internal memory, that is not part of the cache, it performs the following actions:
- it sends the desired read or write instruction to the cache controller logic 102, that performs the read or write action from or to the internal memory;
- in case of a read instruction, data is returned to the processor core 100; in case of a write instruction, the specified memory location is written with the specified data;
- when internal memory was written that is configured as part of the cache, the cache controller logic 102 will detect this with the help of the address bits of the address specified by the write instruction. It will set a bit in the cache control register 103 that can be read by the processor core 100. This bit indicates that the cache is violated. Normally this may not happen. Another possibility would be that the cache controller logic 102 blocks the write action in this case and sends a message to that effect to the processor core 100 to inform the processor core 100 of the failed action.

### Two way associative cache

In case of a two way associative cache, the organization is needed as depicted in figure 5. In figure 5, the same reference numbers as in earlier figures refer to the same components. The set-up now comprises a first cache administration memory 104(1) and a second cache administration memory 104(3), as well as a first cache memory 104(2a) and a second cache memory 104(4a). The second cache administration memory 104(3) comprises a plurality of administration records 140(3a), 140(3b), 140(3c).

For every address received from the processor core 100, that has to be cached, the cache controller logic 102 has to access two administration records and two cache lines at the same time. In case of 32 bit wide memories, the two administration records can be located in the same physical internal memory. In total, then, three physical memory blocks are needed: i.e. cache administration memories 104(1) and 104(3) are implemented in the same physical internal memory.

Dependent on the two Valid bits and the MSB address parts of the address specified by the processor core 100, the cache controller logic 102 will decide that there is a cache hit or a cache miss. There will be a cache hit if either one of these two Valid bits is True and the MSB bits match with the MSB bits in the administration record concerned. In case of a cache hit, the cache controller logic 102 will select the correct data from one of the two cache lines in cache memory 104(2a) or 104(4a), and make it available for the processor core 100. In case of a cache miss, i.e. when the desired data is not stored in one of the cache lines, processor core 100 starts a read action in external memory and one of the cache lines will be filled with the read data as explained above.

Compared with one way associative cache, extra information is needed to select the correct cache line in case of replacement with new data, except when this is done randomly. It makes more sense for updating a cache line to select the cache line that was used least recently (LRU).

To get this information, extra bits have to be written in an administration record in case of a cache hit. In regular caches the administration logic allows concurrent read and write cycles on the data, so no extra time is needed to perform these write cycles.

In an embodiment, the administration record is implemented in regular RAM, and only one read or a write action can be performed in every clock cycle. Such an embodiment has been made and the following was found:
- cache access starts with a read action on the cache control register (administration RAM) by cache controller logic 102;
- when the next address to be read or written is in the same cache line, which is detected by the cache controller logic 102, and which is the case very often, the same administration record will not be read, but will be written with access information. No extra clock cycle will be needed.
- when the next address to be read or written is not in the same cache line, an extra clock cycle is needed to update the administration record with the access information.

### Four way associative cache

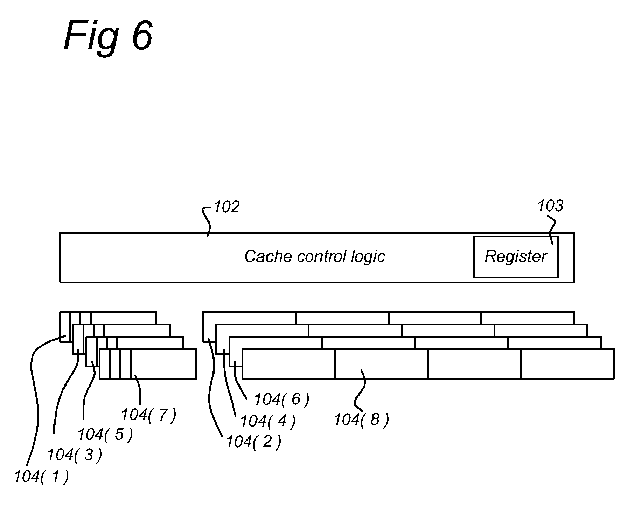

In case of a four way associative cache, the organization is needed as depicted in figure 6. In figure 6, the same reference numbers as in earlier figures refer to the same components. The set-up now comprises first, second, third and fourth cache administration memories 104(1), 104(3), 104(5), and 104(7), respectively, as well as first, second, third and fourth cache memories 104(2), 104(4), 104(6), and 104(8), respectively. Each of these cache administration memories 104(1), 104(3), 104(5), and 104(7), respectively, comprises a plurality of administration records, as is schematically drawn in figure 6.

For every address received by cache controller logic 102 from the processor core 100, that has to be cached, four administration records and four cache lines have to be accessed by cache controller logic 102 at the same time. In case of 32 bit wide memories, two administration records can be located in the same physical memory. So, in one embodiment, in total six physical internal memory blocks are needed, i.e., four for the cache lines in the cache memories 104(2), 104(4), 104(6), and 104(8), respectively, and two for the administration records in the cache administration memories 104(1), 104(3), 104(5), and 104(7), respectively.

Dependent on the four Valid bits and the MSB address parts of the address specified by the processor core 100, the cache controller logic 102 will decide that there is a cache hit or a cache miss. There will be a cache hit if either one of these four Valid bits is True and the MSB bits match with the MSB bits in the administration record concerned In case of a cache hit, the cache controller logic 102 will select the correct data from one of the four cache lines in cache memory 104(2a), 104(4), 104(6), or 104(8), and make it available for the processor core 100. In case of a cache miss, i.e. when the desired data is not stored in one of the cache lines, processor core 100 starts a read action in external memory and one of the cache lines will be filled with the read data as explained above.

This is done in the same way as with a two way associative cache. The cache access logic is added to every administration record, or, if this does not fit anymore in a 16 bits record, to an extra common administration record, which requires extra physical RAM.

Reading from and writing to administration records in cache administration memories 104(1), 104(3), 104(5), or 104(7) is performed in the same way as with two way associative cache.

## Claims

1. A processing arrangement comprising a processor core (100) and a cache controller logic (102) comprising a cache control register (103) storing cache management information, as well as random access memory, said random access memory being subdivided into at least a first and a second memory block (104(1), 104(2)), said first memory block (104(1)) comprising at least one cache administration memory (104(1a) - 104(1c)), said second memory block (104(2)) comprising at least one cache memory (104(2a)), wherein said processing arrangement has at least one of the following features:
• said at least one cache memory (104(2a)) has a cache memory size that is set by said cache management information stored in said cache control register (103) in the cache controller logic (102) as instructed by said processor core (100) while running a program, and
• said at least one cache administration memory (104(1 a) - 104(1c)) has a cache administration size that is set by said cache management information stored in said cache control register (103) in the cache controller logic (102) as instructed by said processor core (100) while running said program.

2. The processing arrangement according to claim 1, wherein the first and a second memory block (104(1), 104(2)) are both 32 bits wide and byte wise addressable.

3. The processing arrangement according to claim 2, wherein each one of the cache administration memories (104(1 a) - 104(1c)) contains 16 bit wide administration records.

4. The processing arrangement according to claim 1, 2 or 3, wherein the first memory block (104(1)) comprises 8 kByte, and the second memory block (104(2)) comprises 32 kByte.

5. The processing arrangement according to any preceding claim, wherein each one of the cache administration memories (104(1a) - 104(1c)) comprises 0.5 kByte, and said at least one cache memory (104(2a)) comprises 4 times as much kByte as a total amount of kBytes used for all of said cache administration memory (104(1a) - 104(1c)).

6. The processing arrangement according to any preceding claim, wherein said at least one cache control memory (104(1a) - 104(1c)) contains cache administration records specifying which addresses of said cache memory (104(2)) comprises valid cache data.

7. The processing arrangement according to claim 6, wherein each administration record contains:
- a predetermined number of administration bits, one of the administration bits being a Valid bit indicating whether a cache line in said cache memory associated with said administration record is assigned to contain valid cache data,
- a most significant bits (MSB) part of an address that belongs to the cache line in said cache memory (140(2a)) associated with said administration record.

8. The processing arrangement according to any preceding claim, wherein said processor core (100) stores data in said cache control register (103) as to which part of said second memory block (104(2)) is assigned to be cache memory (104(2a)).

9. The processor arrangement according to any preceding claim, wherein said random access memory is arranged to support either one of one way associative cache, two way associative cache, and four way associative cache.

10. Method of setting a cache size in a processing arrangement, said processing arrangement comprising a processor core (100) and a cache controller logic (102) comprising a cache control register (103) storing cache management information, as well as random access memory, said random access memory being subdivided into at least a first and a second memory block (104(1), 104(2)), said first memory block (104(1)) comprising at least one cache administration memory (104(1a) - 104(1c)), said second memory block (104(2)) comprising at least one cache memory (104(2a)), wherein said method comprises at least one of the following actions:
• setting a cache memory size of said at least one cache memory (104(2a)) by said cache management information stored in said cache control register (103) in the cache controller logic (102) by running a program on said processor core (100), and
• setting a cache administration size of said at least one cache administration memory (104(1a) - 104(1c)) by said cache management information stored in said cache control register (103) in the cache controller logic (102) as instructed by said processor core (100) while running said program.

11. A computer program product comprising data and instructions arranged to let a processing arrangement perform the method according to claim 10 once being loaded by said processing arrangement.

12. A data carrier comprising a computer program product according to claim 11.
